# EUROPEAN PATENT APPLICATION

(11) **EP 2 239 511 A1**
(43) Date of publication of application: **13.10.2010**
(21) Application number: 10158537.0
(22) Date of filing: 30.03.2010
(51) Int. Cl.: F24C 15/34, F25D 23/06

(54) **Household appliance for preparing or preserving food**

(30) Priority: 09.04.2009 IT TO20090275
(71) Applicant: Indesit Company S.p.A., 60044 Fabriano (AN) (IT)
(72) Inventor: BOSSI, Luca, 60044, Fabriano (Ancona) (IT); FARALDI, Paolo, 60044, Fabriano (Ancona) (IT); ARTECONI, Leonardo, 60044, Fabriano (Ancona) (IT); BAIANO, Antonio, 60044, Fabriano (Ancona) (IT)
(74) Representative: Santonicola, Paolo

(57) **Abstract**

A household appliance for preparing or preserving food products has a bearing structure, a door and a chamber (11) within the structure for receiving food products to be prepared or preserved. The chamber (11) is accessible through the door and is insulated by means of an insulation (20) which comprises at least one insulating body (21-23, 26-27) having a rigid structure formed of cellular glass. The household appliance is preferably a cooking oven (1) having a muffle (10) which defines a cooking chamber (11), the body or the insulating bodies (21-23, 26-27) being arranged leaning against respective walls of the muffle (10), outside the latter.

## Description

### DESCRIPTION TEXT

The present invention refers to household appliances for preparing or for preserving food products and it was developed with particular reference to cooking ovens having a heat insulated muffle.

Household ovens for coking food products typically comprise a metal structure associated to which is an enamelled muffle delimiting a cooking chamber associated to which is a door articulated to the front part of the structure. Ovens of the type indicated above are provided with elements for heating the food products placed in the cooking chamber, and these elements are typically represented by metal heating elements or gas burners. These ovens must thus also be provided with insulation, serving the purpose of preventing heat dispersion from the muffle, both to prevent energy wasting, and to avoid damaging the surrounding furniture in a kitchen.

In most known solutions, the abovementioned insulation comprises a flexible covering having a fibrous structure based on refractory inorganic substances, such as fibreglass or minerals, such as the so-called glass wool. The abovementioned structure tends, during handling thereof, to release fibres having characteristic dimensions smaller than 15 microns, which may be harmful to health. This is the reason why the fibrous structure is usually interposed between two sheets of material resistant to heat, typically aluminium.

The abovementioned flexible covering, having a thickness of about 20-30 mm, is wound around the lateral, upper and lower walls of the muffle, in such a manner to surround it on four sides, and it is kept at a position around the same muffle using heat resistant tapes, typically aluminium adhesive tapes. Possibly, a further flexible covering of the same type, but smaller in size, may be associated to the rear wall of the muffle, to insulate the latter.

Though requiring some precautions to reduce the release of fibres into the environment, the insulation solution indicated above is extremely simple and inexpensive, and it is still the most commonly used for producing household cooking ovens. However, a drawback of this solution lies in the fact that the insulation covering, typically being flexible and compressible, does not surround the muffle with uniform thickness. As a matter of fact, when assembling the oven, the flexible covering is subjected to local pressure or stretching, typically in the areas at the corners of the muffle, between the lateral walls and the lower and upper walls of the muffle itself; occasional deflections may also occur in other areas of the insulation covering, for example due to mounting of supplementary devices of the oven and/or of the muffle, such as for example a fumes discharge pipe or a pipe for cooling the door of the oven. These deflections cause a reduction of the insulation capacity of the covering wound around the muffle, with ensuing dispersion of heat that reduces the efficiency of the oven and may damage the interior components of the oven itself or the surrounding furniture.

Proposed have been insulations made using coverings in a single body or several rigid panels arranged in such a manner to surround the muffle of the oven. Manufacturing such panels and assembly thereof on the muffle is generally complex and expensive; such panels often require use of chemical binders, such as bituminous binders, potentially harmful to health or difficult to dispose of at the end of the useful life of the oven.

The main object of the present invention is essentially that of overcoming the abovementioned drawbacks. In such context, the main object of the present invention is that of providing a household appliance having a chamber insulated by means of an insulation obtainable at low costs, which may be assembled in an easy and safe manner, and suitable to reduce the risks of heat dispersion. Another object of the invention is that of indicating such insulation that is not harmful to the environment, that may be obtained from recycled material and that is susceptible to be disposed and/or recycled in a simple manner at the end of the useful life of the household appliance. An additional object of the invention is that of indicating such insulation that may be used both on cooking ovens and on household refrigerating appliances, substantially offering the same advantages.

One or more of such objects are attained, according to the present invention, by a household appliance having the characteristics indicated in the attached claims, which form an integral part of the technical disclosure provided herein in relation to the invention.

Further objects, characteristics and advantages of the invention shall be clear from the description that follows and from the attached figures, strictly provided for exemplifying and non-limiting purpose, wherein:
- figure 1 is a perspective view of a household cooking oven according to the invention;
- figure 2 is a perspective and sectional view of the oven of figure 1;
- figure 3 is an exploded view of the oven of figure 1;
- figure 4 is a paragraph aimed at illustrating the porous structure of the material used for making the insulation of the oven of the previous figures;
- figure 5 is a microphotograph (200x) illustrating the granular structure of the material of figure 4;
- figure 6 is a microphotograph (3000x) illustrating a detail of the photograph of figure 5, i.e. a granule of the abovementioned structure;
- figure 7 is s front perspective view solely of the muffle of the oven of figure 1, with respective heat insulation;
- figure 8 is a perspective and sectional view of the muffle of figure 7;
- figure 9 is a rear perspective view of the muffle of figure 7;
- figure 10 is an exploded view of the muffle of figures 7-9.

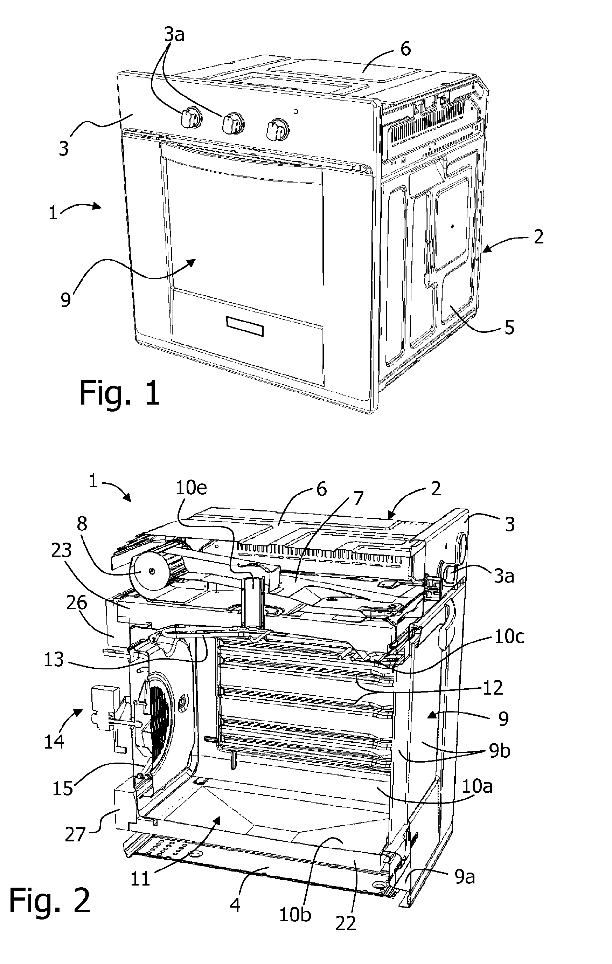

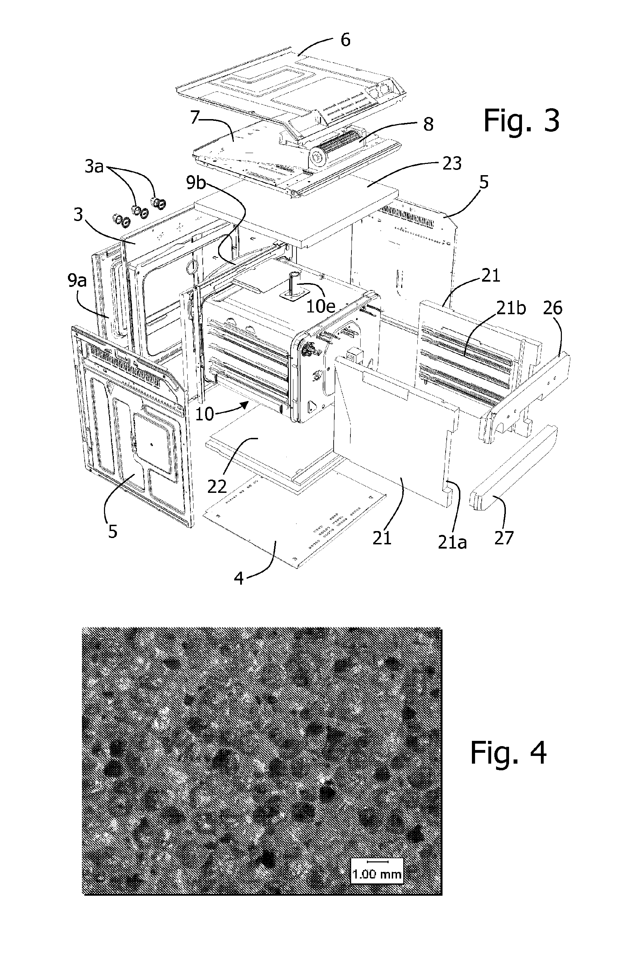

In figures 1-3a a household cooking oven according to the invention, is indicated in its entirety with 1. The oven has a bearing structure or frame, indicated with 2, comprising a front frame 3 at the upper part of which there are positioned control means 3a, for providing a control panel for the oven. As observable particularly in figure 3, the structure also comprises a plurality of walls, and namely a lower wall 4, two lateral walls 5, and an upper wall 6, associated to the latter being a partition element 7, provided with a duct for discharging fumes and/or cooling a door, obtained in a per se known manner, with a respective tangential fan 8.

Hinged at the front part of the structure 2, particularly to a respective lower edge, is a door 9 (figure 1), having at least one frame 9a for a window 9b (figures 2 and 3) made up of two or more parallel glasses.

Accommodated in the structure 2 is a muffle 10. The muffle 10 has a rigid metal body, having two lateral walls 10a, a lower wall 10b, an upper wall 10c and a rear wall 10d. The muffle 10 delimits a chamber for cooking food products, indicated with 11 for example in figure 2, which may be opened and closed at the front part by means of the door 9. As observable in figure 2, mounted in the muffle 8 are heating elements, comprising an upper resistance or grill 13. In the embodiment exemplified in the figures, the oven 1 is a ventilated oven: thus, mounted at the rear wall 10d of the muffle 8, configured according to a per se known technique, are a fan 14 and an annular heating element 15 of the traditional type, and the wall itself is provided with suitable air passages.

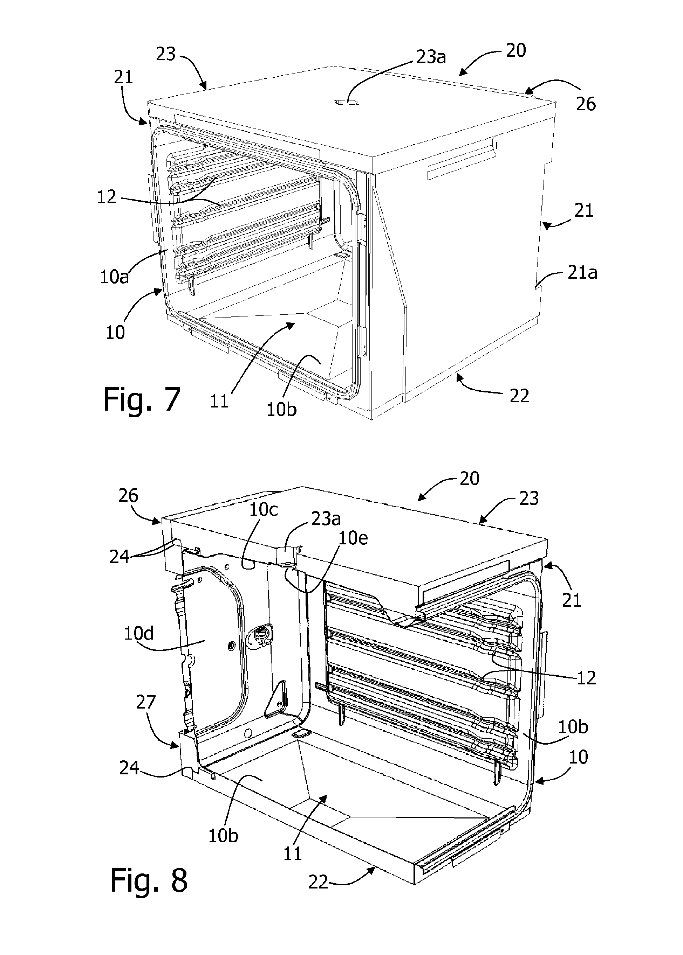

The muffle 10 is insulated by means of an insulation, indicated in its entirety with 20 in figures 7-9. According to the main aspect of the invention, the insulation 20 comprises at least one insulating body having a rigid structure formed of cellular glass.

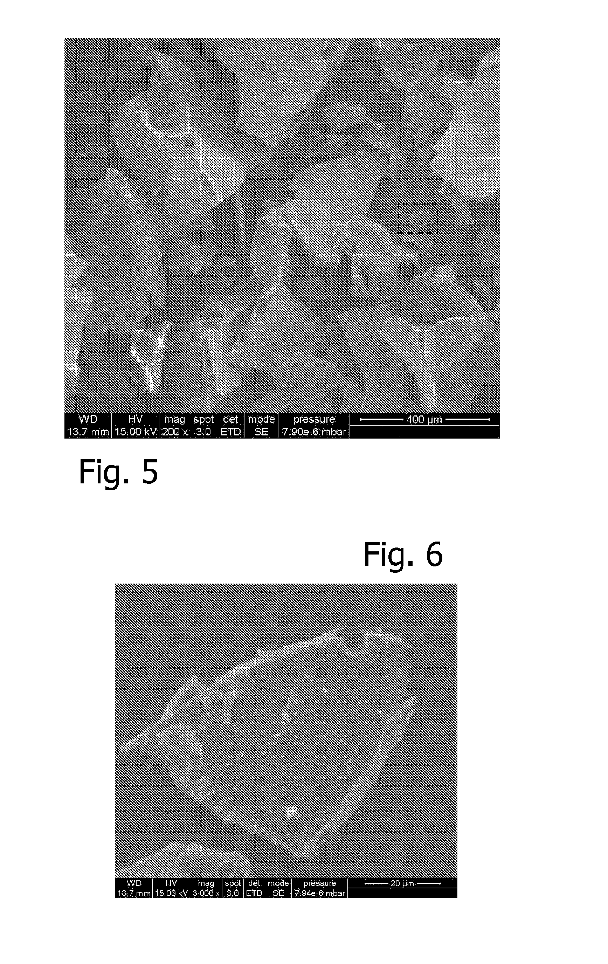

The cellular glass is a material essentially made up of a rigid cellular structure whose cells are mainly closed and filled with gas (air or another gas). The enlarged photograph of figure 5 shows the abovementioned porous structure. The microphotographs of figures 6 and 7 respectively illustrate the granular structure of the porous glass and one of the granules of said structure. Due to this type of structure, the cellular glass is extremely light and has high insulation characteristics; such material is an inorganic material, biologically neutral and inert, free of binders, it is not harmful to the environment and it is easily recyclable.

The cellular glass useable for implementing the invention may be advantageously mainly obtained from recycled products, such as for example motor vehicle windscreens or glass of windows and doors. With the aim of producing the cellular glass, these recycled materials are mixed and heated until molten glass is obtained, such molten glass being subsequently extruded, for example in form of a hollow pipe. The extruded product is subsequently ground to obtain a fine powder, which is mixed with carbon. The mixed powder is placed into moulds, then passed through a special furnace, where the glass melts and the carbon dioxide produced by carbon generates closed cells. The blocks thus obtained are then passed through an annealing furnace, in order obtain a controlled cooling of the same blocks. Lastly, the blocks are cut into slabs of the desired dimensions.

A cellular glass useable for implementing the invention is for example the one sold by Pittsburgh Coming, under the name Foamglas®, to which reference shall be made for further details. Such known material is currently used in the building or industrial sector, for example for insulating roofs and floors or for insulating pipes in petrochemical plants.

An advantage derived from the use of the cellular glass to obtain thermal insulation of a household appliance lies in the fact that, alongside lightness and considerable insulating capacity thereof, it is easy to machine. The cellular glass slabs, even small in terms of size and thickness, may be machined in an easy manner, for example for the performance of cutting, drilling and milling operations, so as to confer to desired shapes and profiles to the same slabs.

The cellular glass, is however easily susceptible to scratches. Therefore, according to a preferred characteristic of the invention, the body of the insulating bodies used for insulating the muffle 8 of the oven 1 include a coating layer of at least one face of the respective rigid structure made of cellular glass. Such solution allows facilitating the handling of the material, when assembling the insulation 20 and/or oven 1. As observable hereinafter, in the implementation illustrated herein, the insulation 20 of the muffle 10 is obtained by means of a plurality of substantially slab-shaped insulating bodies. Preferably, at least the two larger faces of each of such slabs is provided with a respective coating layer, which may advantageously be applied as paint, preferably sprayed. The material used for obtaining the coating layer, having a thickness a few tens of millimetres high, may be made up - for example - of a paint or a substantially gluey substance, particularly based on plaster and water.

Due to the presence of the abovementioned coating, the larger faces of the slabs acquire a substantially smooth configuration and thus easy to handle, without entailing risks related to scratching or release of micro-granules. Obviously, where required, even the lateral faces of the slabs may be provided for in a respective coating layer.

Furthermore, in a preferred embodiment of the invention, the cellular glass used for implementing the invention is made up of granules having a characteristic dimension (length and/or diameter) not smaller than 20 microns. In such manner, despite the relative friability of the cellular glass, the microgranules which may occasionally be released by the slabs during the machining, handling or assembly of the insulation, do not expose the operators to health-related risks, as instead is the case of fibrous materials traditionally used for insulating cooking ovens.

As mentioned, in the embodiment exemplified in the figures, the insulation 20 of the muffle 10 is formed by a plurality of substantially slab-shaped insulating bodies. With particular reference to figures 7-10, indicated with 21 are two lateral slabs, intended to be arranged leaning against the lateral walls 10a of the muffle, indicated with 22 and 23 are a lower slab and an upper slab, intended to be arranged respectively leaning against the lower 10b and upper 10c walls of the muffle 10.

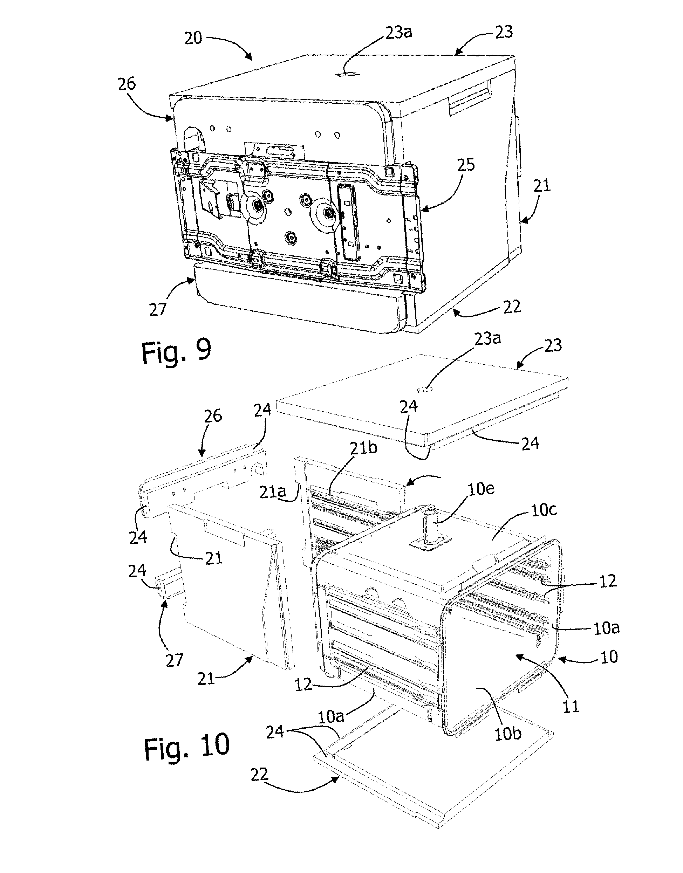

Preferably, the edges of the adjacent slabs are configured for mutual coupling. As observable for example in figures 8 and 10, the edges of at least some of the slabs are profiled, for example through milling, in such a manner to form notches 24, having a notch of a slab which is intended to be coupled or fitted onto the notch of an adjacent slab. Obviously, the coupling profiles selected for the edges of the slabs may be different, and even more complex, with respect to the exemplified ones, also due to the possibility of easily machining the slabs. Through this solution, the adjacent edges of the slabs 21-23 may be coupled in a relatively accurate manner, and this allows substantially maintaining the thickness of the insulation 20 at the corner zones of the muffle 8 constant, in such a manner to prevent reduction of the sealing upon transmission of heat.

Another advantage of the proposed solution lies in the fact that the various slabs 21-23 may be held at the correct mutual position, around the muffle 10, using means analogous to those currently used in combination with insulation coverings made of glass wool. As a matter of fact, advantageously used for such purpose may be aluminium adhesive tapes, not represented, or similar materials suitable to resist to temperature. This solution for mutual fixing between the slabs 21-23 and possibly with respect to the bearing structure of the oven 1 also allows the same slabs space for slight displacement/settling when, during the heating of the cooking chamber 11, the muffle 10 may be subjected to slight dilatations.

In the exemplified embodiment, the oven 1 is a ventilated oven. For this reason, associated externally to the bottom wall 10d of the muffle 10 is a crosspiece, indicated with 25 in figure 9, which provides a structural component of the same muffle, for supporting the fan 14 and of the heating element 15. It should be observed that the lateral slabs 21 have, on the rear edge, respective discharge elements 21a at the ends of the crosspiece 25, which project laterally from the body of the muffle 10.

Given the presence of this crosspiece 25, and the overall dimension of the motor of the fan 14, the rear wall 10d of the muffle 10 may be conveniently insulated using two distinct slab-shaped insulating bodies, indicated with 26 and 27, whose size is smaller than that of those used for insulating the other walls of the muffle 10. As observable, shown in the example, these two slabs 26 and 27 are substantially parallel to each other and mounted at positions substantially diametrically opposite with respect to the motor of the fan 14, i.e. of the rotation axis thereof It goes without saying that in case of static ovens, i.e. without a rear fan, the wall 10d of the muffle 10 may be insulated by means of one porous glass slab, provided with the respective coating. Still in the case of fans having a rear fan, the insulation of the wall 10d may possibly be obtained using one cellular glass slab, provided with a central passage to be positioned at the motor of the fan 14.

Still referring to the solution illustrated in the figures, defined in the lateral walls 10a of the muffle 10 are sliding guides, some indicated with 12, for supports inside the cooking chamber, such as for example grills or dripping pans. These guides 12 are substantially attained using drawn elements that are extended in the direction of the depth of the muffle 10, and which provide inside and outside the walls 10b alternating projecting parts and flat and/or recessed parts. In such case, in order to guarantee accurate coupling, defined in the parts of the slabs 21 intended to be arranged leaning against the walls 10a may be a profile 21b matching the profile defined outside the same walls 10a by the abovementioned guides 12, for example substantially complementary and fitting. It may also be provided for that the slabs 21 be however substantially flat even in the region intended to face the zone of the guides 12: in such case provided between each wall 10a and the respective slab 21 may be free thin spaces, or such spaces may be filled with a sealant resistant to temperature, such as for example a silicone-based sealant.

Furthermore, in the case illustrated in the figures, the upper wall 10c of the muffle 10 is provided with a passage 10e for discharging cooking fumes/vapours, in communication with a suction pipe provided with a tangential fan 8 (figure 2 and 3). Due to the easy machinability of the cellular glass, conveniently obtained in the upper slab 23 is a through hole 23c, intended to be arranged at the abovementioned passage 10e.

Previously, reference has been made to an embodiment wherein the insulation 20 of the muffle 10 is obtained by means of a plurality of slab-shaped insulating bodies 21-24, 26-27, each of which is arranged directly leaning against a respective lateral wall of the muffle 10. However, in possible variant embodiments, the insulation of the muffle may be made of non-planar rigid products made of cellular glass. In a possible implementation, for example, the insulation of the walls 10a-10c of the muffle 10 may be made of two insulating bodies each having at least two portions orthogonal with respect to each other, such as for example two substantially L-shaped bodies, in such a manner that the first portion of each body covers a respective lateral wall 10a and the second portion of each body covers the lower wall 10b, respectively the upper wall 10c, of the muffle. Another possibility is that of providing two substantially C-shaped bodies, capable of entirely covering a wall of the muffle and partially two other walls of the muffle, orthogonal to the first. Still another possibility is that of providing a substantially U-shaped body, intended to be fitted onto the muffle in such a manner to cover three orthogonal walls thereof (for example the lateral walls 10a and the upper wall 10c), and a second slab-shaped body intended to be arranged leaning against the other wall (for example the lower wall 10b). Obviously, even the abovementioned variants of the adjacent edges of the various insulating bodies shall be conveniently profiled for mutual coupling, as explained above. Furthermore, in another possible implementation, the insulation 20 may be configured in a single body, substantially hollow or tubular, i.e. provided with a cavity suitable to receive the muffle 10 therein.

Alternatively, the insulating material comprising the cellular glass may be prepared in form of slabs each individually fixable to the walls 4-5-6 of the casing of the oven 1. In such case, the slabs may be applied onto the surfaces of such walls 4-5-6 facing outwards and/or towards the surfaces of such walls 4-5-6 facing towards the muffle 10.

One or more foamed glass slabs may be clearly conveniently used even for insulating the door 4, at the region beside the glass window, still exploiting the easy machinability of the material in question.

The invention has been described above referring to a household cooking oven 1, but the idea on which the invention is based may also be advantageously applied in household appliances for preserving food products, such as for example refrigerating apparatus (refrigerators, freezers, combined refrigerators). As known, such household appliances typically comprise an external cabinet, provided with one or more doors, and an interior structure, usually made of plastic material, which defines one or more chambers for preserving food products, where provided for between the outer cabinet and the interior structure is an insulation, typically formed by polyurethane material. The polyurethane materials used for the insulation of the refrigerating apparatus are extremely difficult to disassemble and recycle, hence even in this application use of cellular glass insulating bodies may be advantageous given that such bodies, as mentioned beforehand, are not harmful to the environment and they are easy to disassemble and recycle. Thus, even in case of such application, even the slab-shaped insulating bodies coated with cellular glass may be configured to suit the needs thereof and arranged between the external cabinet and the interior structure, at contact with the external of the latter, so as to obtain the heat insulation of the preservation chamber.

Worth mentioning is the advantage of the invention represented by the low environmental impact of cellular glass with respect to the insulation materials alternative thereto. As a matter of fact, cellular glass was calculated to have an environmental impact index equivalent to 3 (3 during production + 0 during use), with respect to a calculation of the same index equivalent to 5.75 (5 during production + 0.75 during use) for polyurethane foam and a calculation equivalent to 4.5 (3.5 during production + 1 during use) for glass wool (see Insulation Industry Handbook drafted in 2000 in the United Kingdom by TIMSA - Thermal Insulation Manufacturers and Suppliers Association).

## Claims

1. Household appliance for preparing or preserving food products, such as a cooking oven or a refrigerating appliance, having a bearing structure (2), a door (9) and a chamber (11) within the structure (2) for receiving food products to be prepared or preserved, the chamber (11) being accessible through the door (9) and being insulated by means of an insulation (20), the insulation (20) comprising at least one insulating body (21-23, 26-27) having a rigid structure formed of cellular glass, said rigid structure of cellular glass being in particular formed of granules having a characteristic dimension not lower than 20 micron.

2. Household appliance according to claim 1, wherein the at least one insulating body (21-23, 26-27) includes a coating layer of at least one face of the rigid structure.

3. Household appliance according to claim 2, wherein the coating layer is a painted layer and/or a substantially gluey layer and/or comprising water and plaster.

4. Household appliance according to claim 1 or 2, wherein the at least one insulating body (21-23, 26-27) is substantially slab-shaped.

5. Household appliance according to any one of claims 1 to 4, wherein the insulation (20) comprises a plurality of insulating bodies (21-23, 26-27).

6. Household appliance according any one of claims 1 to 4, wherein the insulation (20) comprises at least one of:
- a plurality of substantially slab-shaped insulating bodies (21-23, 26-27), particularly at least four substantially slab-shaped insulating bodies;
- two insulating bodies each having at least two body portion substantially orthogonal to each other, such as for example two substantially C-shaped or L-shaped bodies;
- one insulating body having at least two body portion substantially parallel to each other, such as a substantially U-shaped body, and a substantially slab-shaped insulating body;
- a single substantially hollow or tubular insulating body.

7. Household appliance according to claim 4 or 6, wherein adjacent edges (24) of different insulating bodies (21-23, 26-27) are configured for mutual coupling.

8. Household appliance according to claim 1, wherein the insulating body or each insulating body (21-23, 26-27) is/are individually fixed:
- to said bearing structure (2), and namely to a respective surface of said bearing structure (2) facing outside the same structure and/or to a surface of said bearing structure (2) facing said muffle (10), and/or
- to a body of said muffle (10).

9. Household appliance according to claim 1, wherein the at least one insulating body is mounted in the door (9).

10. Household appliance according to claim 1, wherein the insulating body or the insulating bodies (21-23, 26-27) is/are kept in position outside the chamber (11) by adhesive tape, particularly aluminium or the like adhesive tape.

11. Household appliance according to one or more of claims 1 to 10, wherein the household appliance is a coking oven (1) having a muffle (10) defining a cooking chamber (11), the at least one insulating body (21-23, 26-27) leaning against at least one wall (10a-10d) of the muffle (10), on the outside thereof, or being fixed to said bearing structure (2), and namely to a surface of said bearing structure (2) facing the outside thereof and/or to a surface of said bearing structure (2) facing said muffle (10).

12. Household appliance according to claim 11, wherein the muffle (10) has a bottom wall (10d) with a fan (14) and the insulation (20) comprises two said insulating bodies (26, 27) at said bottom wall (10d), mounted in spaced apart positions and substantially parallel to each other.

13. Household appliance according to claim 11, wherein the muffle (10) has two opposite side walls (10a) wherein guides are defined (12) for internal supports of the cooking chamber (11) and wherein a region o fan insulating body (21) facing one said side wall (10a) has a profile substantially congruent or corresponding to the profile determined by said guides (12) on the outside of the respective side wall (10a).

14. Household appliance according to claim 11, wherein the muffle (10) has an upper wall (10c) with a passage for discharging fumes/vapours (10e) and a region of an insulating body (23) facing said upper wall (10c) has a through opening (23a) substantially at said passage (10e).

15. Household appliance according to one or more of claim 1 to 10, wherein the household appliance is a refrigerating appliance having an outer casing and an internal structure defining at least one preservation chamber, and wherein the at least one insulating body is arranged between the outer casing and the internal structure, particularly leaning against to at least one of a surface of said outer casing and a surface of said internal structure.
